(19) Europäisches Patentamt
European Patent Office
Office européen des brevets

(11) **EP 4 283 816 A1**

(12) **EUROPEAN PATENT APPLICATION**
published in accordance with Art. 153(4) EPC

(43) Date of publication:
**29.11.2023 Bulletin 2023/48**

(21) Application number: **22742160.9**

(22) Date of filing: **18.01.2022**

(51) International Patent Classification (IPC):
**H02J 3/38** (2006.01)

(52) Cooperative Patent Classification (CPC):
**H02J 3/38**

(86) International application number:
**PCT/CN2022/072571**

(87) International publication number:
**WO 2022/156681 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.01.2021 CN 202110071233**
**19.01.2021 CN 202110071232**

(71) Applicants:
• **NR Electric Co., Ltd.**
  **Nanjing, Jiangsu 211102 (CN)**
• **NR Engineering Co., Ltd.**
  **Nanjing, Jiangsu 211102 (CN)**

(72) Inventors:
• **LI, Gang**
  **Nanjing, Jiangsu 211102 (CN)**
• **LU, Yu**
  **Nanjing, Jiangsu 211102 (CN)**
• **TIAN, Jie**
  **Nanjing, Jiangsu 211102 (CN)**
• **DONG, Yunlong**
  **Nanjing, Jiangsu 211102 (CN)**
• **LI, Haiying**
  **Nanjing, Jiangsu 211102 (CN)**
• **WANG, Ke**
  **Nanjing, Jiangsu 211102 (CN)**
• **YIN, Zihan**
  **Nanjing, Jiangsu 211102 (CN)**
• **XIAO, Shilei**
  **Nanjing, Jiangsu 211102 (CN)**

(74) Representative: **Cabinet Bleger-Rhein-Poupon**
**4a rue de l'Industrie**
**67450 Mundolsheim (FR)**

(54) **CONTROL METHOD AND SYSTEM FOR ISLAND OPERATION OF VSC-HVDC SYSTEM**

(57) The application provides a control method for island operation of a VSC-HVDC transmission system, which comprises the following steps: during the island operation of the VSC-HVDC transmission system, implementing startup and steady-state operation of a converter in an open-loop control mode in a startup state; when a fault of an AC system is detected, switching the converter from the open-loop control mode to a double closed-loop control mode to limit fault current and suppress interference; in a non-fault state, operating in an adaptive island control mode; or, in the non-fault state, implementing the steady-state operation of the converter in the open-loop control mode. When the AC system fails, the double closed-loop control mode is adopted to limit fault current and suppress interference; and during the island operation, by automatically switching to a mode without inner loop current control, the system can be stabilized because there is no negative resistance caused by delay such as sampling control, and medium-high frequency oscillation caused by introducing a negative resistance component in closed-loop control can be avoided, thus providing a better solution for large-scale new energy access.

S103

According to a received voltage setting reference value, a frequency setting reference value, the dq-axis voltage signal and the dq-axis current signal, and the three-phase voltage signal and the three-phase current signal at the AC side of the VSC-HVDC converter station, generate an adaptive island control bridge arm reference wave by selecting a control mode

Fig. 7

**Description**

Technical Field

The application relates to the technical field of VSC-HVDC (Voltage Source Converter-High Voltage Direct Current) transmission in power systems, in particular to a control method and control system for island operation of a VSC-HVDC transmission system, and an electronic device.

Background

In order to solve the problem of global warming caused by increasing carbon emission, new energy power generation, as green energy, has attracted more and more attention of governments all over the world. As green energy, wind power generation and photovoltaic power generation have been increasingly valued by all countries, and major countries in the world are actively developing new energy sources including wind power and photovoltaic power generation. Large-scale photovoltaic and wind power resources are generally far away from a load center, and large-scale offshore wind power resources close to a load center need to be transmitted through cables. At present, how to realize efficient and high-quality access of large-scale new energy to a power grid is a problem to be solved in the field of grid connection of new energy. Although offshore wind power is close to a load center, due to the use of cables, when a wind farm is more than 60 km away from the shore, power loss, sea area occupation, reactive power compensation and so on is becoming increasingly difficult by using a traditional AC output mode, which reduces the advantages of AC access. VSC-HVDC transmission is an option for large-scale wind power transmission because it has a flexible control mode, does not generate reactive power and occupies less sea area. When there is no AC power supply or new energy system in an AC power grid area which a VSC-HVDC converter station accesses, the VSC-HVDC converter station needs to provide stable AC voltage for a passive system or new energy in an island control mode.

Considering that high-frequency oscillation tends to occur when the VSC-HVDC converter station is started in an island mode, the island control mode adopts open-loop control to directly output constant AC voltage to avoid oscillation. Because the open-loop control cannot suppress interference due to the lack of a feedback link, when an AC system fails and current limiting is required, the control mode should be switched to closed-loop control. By setting a current limiting link in a controller to prevent fault current from being out of limit, the trip of the VSC-HVDC converter station caused by fault overcurrent can be avoided. At present, the combination of open-loop control and closed-loop control has the problem of system instability after switching, and a closed-loop control integrator may be saturated. In the switching process, the integrator goes through a desaturation process, in which a closed-loop control failure leads to system instability.

When a VSC-HVDC transmission system operates stably in an island mode, a double closed-loop control scheme can effectively suppress fault current, but the introduction of inner-loop current control will bring about mid-high frequency oscillation. Specifically, for example, a "Double Closed-Loop Control Method" disclosed in patent CN201610938897 and the article "Overview of Oscillation Phenomenon Analysis and Control Method of VSC-HVDC Transmission System" describe the analysis of a mid-high frequency oscillation phenomenon. Open-loop control may also be adopted, such as the open-loop control modes proposed in the paper "Research on Black Start Control Capability of VSC-HVDC Transmission System" and "Direct Voltage Control of Passive Network Power Supply of MMC VSC-HVDC Transmission System", but the open-loop control mode leads to uncontrollable current and thus trips, which is not conducive to new energy transmission.

The above information disclosed in the background art is only used to enhance the understanding of the background of the invention, so it may contain information that does not constitute the prior art known to those of ordinary skill in the art.

Summary

The application provides a control method for island operation of a VSC-HVDC transmission system. When an AC system fails, a double closed-loop control mode is adopted to limit a fault current and suppress interference; and during island operation, a control system of a VSC-HVDC converter station connected with a new energy source adaptively selects an adaptive island control method with an inner loop current control mode or without the inner loop current control mode according to an operation state of the VSC-HVDC transmission system. By automatically switching to a mode without inner loop current control, the system can be stabilized because there is no negative resistance caused by delay such as sampling control, the problem of medium-high frequency oscillation caused by introducing a negative resistance component into closed-loop control can be avoided, and the controllability of the fault current in a fault state is realized.

According to an aspect of the application, a control method for island operation of a VSC-HVDC transmission system is provided, the VSC-HVDC transmission system is connected with an AC system and comprises a converter, and the control method comprises:

implementing startup and steady-state operation of the converter in an open-loop control mode in a startup state during the island operation of the VSC-HVDC transmission system;
switching the converter from the open-loop control mode to a double closed-loop control mode when a fault of the AC system is detected, to limit fault current and suppress interference;
operating in an adaptive island control mode in a non-fault state; or
implementing the steady-state operation of the converter in the open-loop control mode in the non-fault state.

According to an exemplary embodiment, the adaptive island control mode comprises:

acquiring a three-phase voltage and a three-phase current at an AC side of the VSC-HVDC transmission system and converting the acquired voltage and current into a dq-axis voltage signal and a dq-axis current signal through an abc/dq coordinate system; and
generating an adaptive island control bridge arm reference wave, by selecting a control mode, according to a received voltage setting reference value, a frequency setting reference value, the dq-axis voltage signal and the dq-axis current signal, and a three-phase voltage signal and a three-phase current signal at the AC side of the VSC-HVDC transmission system.

According to an exemplary embodiment, selecting a control mode comprises: selecting an island control mode with inner loop current control or an island control mode without inner loop current control.

According to an embodiment, selecting an island control mode with inner loop current control or an island control mode without inner loop current control comprises: selecting the island control mode without inner loop current control when a system power $P < P_{set1}$

or a peak current $I_{peak} < I_{set1}$ or $\sqrt{I_d^2 + I_q^2} < I_{set1}$ in a startup unlocking and no-load state; otherwise, automatically switching to the island control mode with inner loop current control, wherein $P_{set1} \leq 0.1$ pu, and $I_{set1} \leq 0.1$ pu.

According to an exemplary embodiment, selecting an island control mode with inner loop current control or an island control mode without inner loop current control further comprises: automatically switching to the island control mode without the inner loop current control module when it is detected that a voltage harmonic content $Us\_h > Us\_hset$ or a current harmonic content $I\_h > Iv\_hset$ at a grid side in the control mode with an inner loop current control module, wherein $Us\_hset \geq 0.01$ pu, and $Iv\_hset \geq 0.01$ pu.

According to an exemplary embodiment, selecting an island control mode with inner loop current control or an island control mode without inner loop current control further comprises: automatically switching to the island control mode with the inner loop current control module when it is detected that a zero-sequence voltage $U_0 > U_{0\_set}$ or a current $I_s > I_{s\_set}$ or a bridge arm current $I_b > I_{b\_set}$ at a grid side in the control mode without an inner loop current control module, wherein $U_{0\_set} \geq 0.05$ pu, $I_{s\_set} \geq 1.15$ pu, and $I_{b\_set} \geq 1.15$ pu.

According to an exemplary embodiment, the double closed-loop control mode comprises:

outer-loop control: inputting an AC voltage and frequency of the converter at a grid side, and outputting an inner loop active current reference value and an inner loop reactive current reference value through a proportional-integral controller; and
inner-loop control: receiving the inner loop active current reference value and the inner loop reactive current reference value output by the outer-loop control, and quickly tracking the inner loop active current reference value and the inner loop reactive current reference value, so as to directly control a current waveform and phase of the converter at an AC side.

According to an exemplary embodiment, the double closed-loop control mode further comprises: preventing a fault current of the AC system from being out of limit by a current limiting link.

According to an exemplary embodiment, further comprising: assigning an initial value to an input of an outer-loop control integrator when the converter is switched from the open-loop control mode to the double closed-loop control mode.

According to an exemplary embodiment, the detection of a fault of the AC system comprises:

a voltage criterion, when a system voltage Us < a preset low value $U_{s\_setL}$ of the system voltage or Us > a preset high value $U_{s\_setH}$ of the system voltage, or when a DC voltage $U_{DC}$ < a preset low value $U_{DC\_setL}$ of the DC voltage or $U_{DC}$ > a preset high value $U_{DC\_setH}$ of the DC voltage, or when a zero-sequence voltage $U_0$ at an AC valve side > a zero-sequence voltage $U_{0\_set}$ threshold at the AC valve side, switching the system from the open-loop control mode to the double closed-loop control mode;
a current criterion, when a current Is at a grid side > a current threshold $I_{s\_set}$ at the grid side or a bridge arm current Ib > a bridge arm current threshold Ib_set, switching the system from the open-loop control mode to the double closed-loop control mode;
a power criterion, when an active power P < an active power threshold $P_{\_set}$, switching the system from the open-loop control mode to the double closed-loop control mode; and
a frequency criterion, when a system frequency f < a preset low value $f_{\_setL}$ of the system frequency or f > a preset high value $f_{\_setH}$ of the system frequency, switching the system from the open-loop control mode to the double closed-loop control mode.

According to an exemplary embodiment, the preset low value $U_{s\_setL}$. of the system voltage≤1 pu, and the preset high value $U_{s\_setH}$ of the system voltage≥1 pu; the preset low value $U_{DC\_setL}$ of the DC voltage≤1 pu, and the preset high value $U_{DC\_setH}$ of the DC voltage≥1 pu; and the zero-sequence voltage threshold $U_{0\_set}$ at the AC valve side≥0 pu, the current threshold $I_{s\_set}$ at the grid side≥1 pu, the bridge arm current threshold $Ib\_set$≥1 pu, the active power threshold $P_{\_set}$≤1 pu, the preset low value $f_{\_setL}$ of the system frequency <50 Hz, and the preset high value $f_{\_setH}$ of the system frequency >50 Hz, where pu is an unit of per-unit value being a relative value between an actual value and a rated value.

According to an exemplary embodiment, during island operation of the VSC-HVDC transmission system, the VSC-HVDC transmission system operates with load or without load.

According to another aspect of the application, a control system for island operation of a VSC-HVDC transmission system is provided, comprising: an acquisition and conversion unit, configured to convert an acquired three-phase voltage and three-phase current at an AC side of the VSC-HVDC transmission system into a dq-axis voltage signal and a dq-axis current signal through an abc/dq coordinate system; and an adaptive island control unit, configured to generate an adaptive island control bridge arm reference wave according to a received voltage setting reference value, a frequency setting reference value, the dq-axis voltage signal and the dq-axis current signal, and a three-phase voltage signal and a three-phase current signal at the AC side of the VSC-HVDC transmission system.

According to an exemplary embodiment, the adaptive island control unit comprises: an island control module with inner loop current control, configured to generate a dq-axis closed-loop voltage reference wave; an island control module without inner loop current control, configured to generate a dq-axis open-loop voltage reference wave; a frequency phase control module, configured to generate a synchronous phase signal for the abc/dq coordinate system conversion of the acquisition and conversion unit and the dq/abc coordinate system conversion of a reference wave generation module; an adaptive island control selection module, configured to select an island control module with inner loop current control or an island control module without inner loop current control; and the reference wave generation module, configured to receive the synchronous phase signal of the frequency phase control module for dq/abc coordinate system conversion, and generate six bridge arm reference waves.

According to an exemplary embodiment, the island control module with inner loop current control is further configured to: convert the received voltage setting reference value, the dq-axis voltage signal and the dq-axis current signal into an output signal of a dq-axis closed-loop voltage reference wave.

According to an exemplary embodiment, the island control module without inner loop current control is further configured to: convert the voltage setting reference value and the dq-axis voltage signal into an output signal of a dq-axis open-loop voltage reference wave.

According to an exemplary embodiment, the adaptive island control selection module is further configured to: convert the three-phase voltage signal and the three-phase current signal at the AC side of the VSC-HVDC transmission system, the dq-axis closed-loop voltage reference wave and the dq-axis open-loop voltage reference wave into an output signal of an adaptive input reference wave voltage.

According to an exemplary embodiment, a voltage outer loop controller and a current loop controller in both the island control module with inner loop current control and the island control module without inner loop current control each comprise a PI controller and/or a PR controller.

According to one aspect of the application, an electronic device is provided, comprising: one or more processors; and a storage apparatus configured to store one or more programs, wherein when the one or more programs are executed by the one or more processors, the one or more processors implement the control method as described above.

According to the technical solution of the application, in the startup stage, the island open-loop operation avoids high-frequency oscillation caused by connecting transformers or short no-load lines, and the system changes from the open-loop control mode to the double closed-loop control mode when the fault occurs, thus effectively restraining a fault overcurrent.

According to the technical solution of the application, in the normal operation stage, the acquired three-phase voltage and three-phase current of the VSC-HVDC transmission system at the AC side are converted into the dq-axis voltage signal and the dq-axis current signal through the abc/dq coordinate system by the acquisition and conversion unit; and by automatically switching to a mode without inner loop current control through the adaptive island control unit, the system can be stabilized because there is no negative resistance caused by delay such as sampling control, and the problem of medium-high frequency oscillation caused by introducing a negative resistance component into closed-loop control can be avoided, thus providing a better solution for large-scale new energy access.

It should be understood that the above general description and the following detailed description are only exemplary, and do not limit the application.

Brief Description of the Drawings

In order to explain the technical scheme in the embodiments of the application more clearly, the drawings used in the description of the embodiments will be briefly introduced below. Obviously, the drawings in the following description are only for some embodiments of the application. For those of ordinary skill in the art, other drawings can be obtained according to the following ones without going beyond the scope of this application.

Fig. 1 shows a diagram of a VSC-HVDC transmission system according to an exemplary embodiment of the application.

Fig. 2 shows a flowchart of a control method for island operation of a VSC-HVDC transmission system according to an exemplary embodiment of the application.

Fig. 3 shows a flowchart of an open-loop control mode according to an exemplary embodiment of the application.

Fig. 4 shows a diagram of a double closed-loop control mode according to a first exemplary embodiment of the application.

Fig. 5 shows a diagram of a double closed-loop control mode according to a second exemplary embodiment of the application.

Fig. 6 shows a composition diagram of a VSC-HVDC transmission system connected with a new energy source or a passive system according to another exemplary embodiment of the application.

Fig. 7 shows a flowchart of an adaptive island control mode according to an exemplary embodiment of the application.

Fig. 8 shows a diagram of a control system for island operation of a VSC-HVDC transmission system according to an embodiment of the application.

Fig. 9 shows a structural diagram of an adaptive control unit according to an embodiment of the application.

Fig. 10 shows a block diagram of an electronic device for island operation control of a VSC-HVDC transmission system according to an embodiment of the application.

Detailed Description of Embodiments

Exemplary embodiments will now be described more fully with reference to the accompanying drawings. However, the exemplary embodiments can be implemented in various forms and should not be construed as limited to the embodiments set forth herein. On the contrary, these embodiments are provided to make this application more thorough and complete, and to fully convey the concept of the exemplary embodiments to those skilled in the art. In the drawings, the same reference numerals refer to the same or similar parts, so repeated descriptions will be omitted.

The described features, structures, or characteristics may be combined in any suitable manner in one or more embodiments. In the following description, numerous specific details are provided to give a thorough understanding of the embodiments of the disclosure. However, those skilled in the art will realize that the technical solution of the disclosure can be practiced without one or more of these specific details, or other ways, components, materials or devices can be adopted. In these cases, well-known structures, methods, devices, implementation steps, materials or operations will not be shown or described in detail.

Further, terms "comprise" and "include" and any variations thereof are intended to cover non-exclusive inclusion. For example, a process, method, system, product or device comprising a series of steps or units is not limited to the listed steps or units, but optionally comprises steps or units not listed, or optionally comprises other steps or units inherent to the process, method, product or device.

Terms such as "first" and "second" in the specification and claims of this application and the drawings are used to distinguish different objects, but not to describe a specific order. Further, the terms "comprise" and "include" and any variations thereof are intended to cover non-exclusive inclusion.

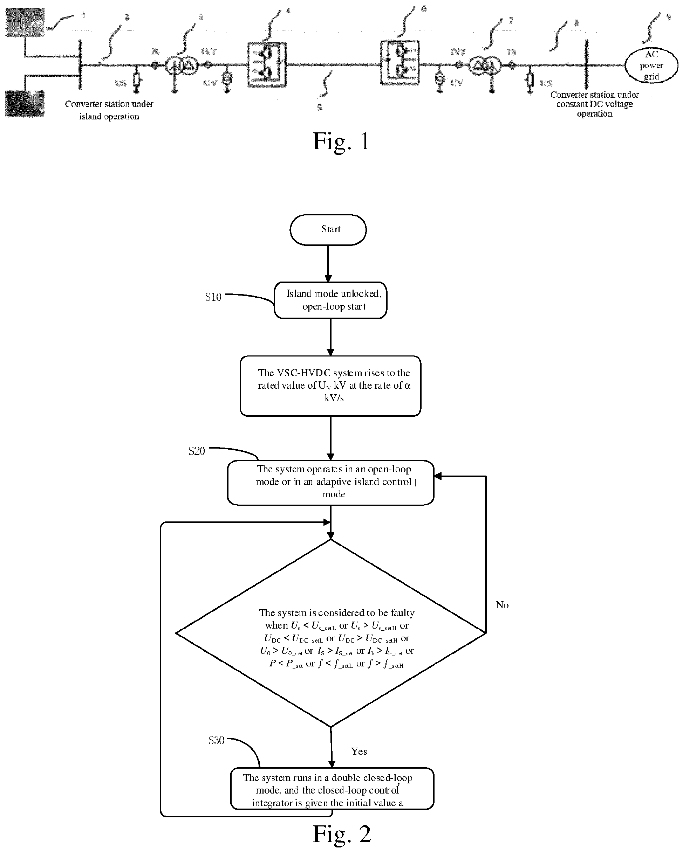

Fig. 1 shows a diagram of a VSC-HVDC transmission system according to an exemplary embodiment of the application.

As shown in Fig. 1, a VSC-HVDC transmission system comprises an AC system, a converter, a connecting transformer 3, a new energy source 1 and a DC field device 4. A primary side of the connecting transformer 3 is connected to the new energy source 1 through an incoming switch 2, a secondary side of the connecting transformer 3 is connected to the converter and the DC field device 4, the converter and the DC field device 4 are connected to a converter and a DC field device 6 of an opposite station through a DC line 5, and the converter and the DC field device 6 of the opposite station are connected to an AC power grid or power supply 9 through a connecting transformer 7 of the opposite station via a primary side switch 8 of the opposite station.

Fig. 2 shows a flowchart of a control method for island operation of a VSC-HVDC transmission system according to an exemplary embodiment of the application.

In S10, during the island operation of the VSC-HVDC transmission system, startup and steady-state operation of a converter are implemented in an open-loop control mode in a startup state.

During island operation of the VSC-HVDC transmission system, the VSC-HVDC transmission system operates with load or without load.

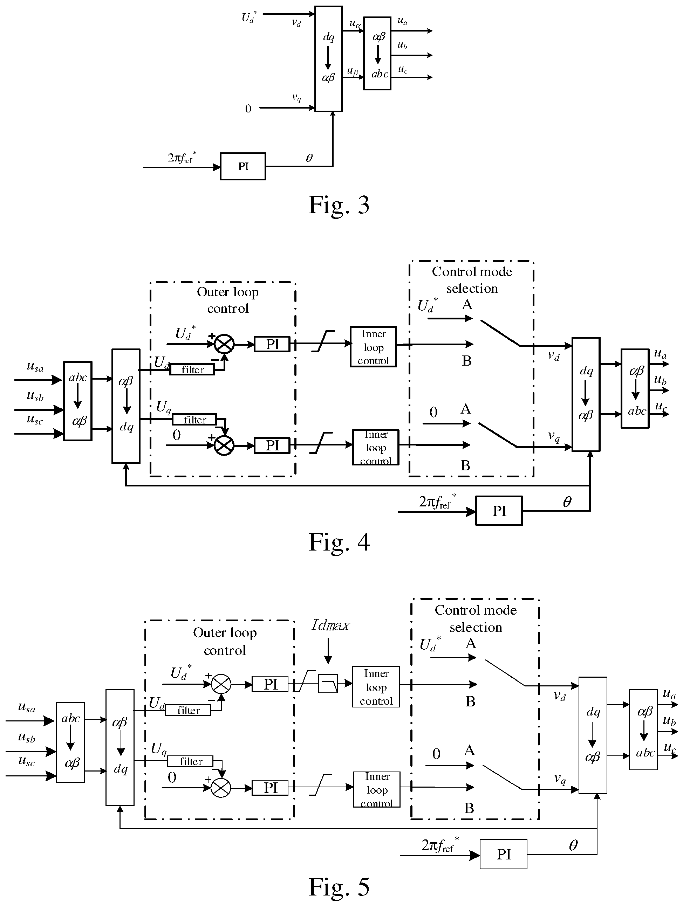

After being unlocked in an island mode, the VSC-HVDC transmission system is started in an open-loop control mode. As shown in Fig. 3, a preset d-axis component of an AC voltage of the converter at a grid side $U_d{}^*$, a preset q-axis component of the AC voltage of the converter at the grid side $U_q{}^*$ and a preset frequency reference value $f_{ref}{}^*$ are used as inputs of an open-loop controller, and after PI adjustment of the open-loop controller, a constant AC voltage reference wave of the converter is output, $vd=U_d{}^*$, $vq=0$, thus realizing the control of a current waveform and phase of the converter at an AC side.

The open-loop control mode is adopted when the VSC-HVDC transmission system is started in the island mode. A voltage reference wave rises to a rated voltage $U_N$ kV from 0 kV at the rate of $\alpha$ kV/s. After a stable AC voltage is established, the VSC-HVDC transmission system maintains the open-loop control operation, providing a stable voltage amplitude and frequency for a new energy system or passive AC system.

This startup mode can avoid the big disturbance and impact during island startup, suppress the high-frequency components and distortion of output voltage and current, and maintain the stable operation of the system.

In S20, during island operation of the VSC-HVDC transmission system, in the non-fault state, the steady-state operation of the converter is implemented in the open-loop control mode, or operation is implemented in an adaptive island control mode. Here, the open-loop control mode is the same as the control mode in the startup process, which will not be repeated here. The adaptive island control mode will be explained in detail below.

In S30, when an AC system fault of the VSC-HVDC transmission system is detected, the converter is switched from the open-loop control mode to a double closed-loop control mode to limit fault current and suppress interference.

The detection of the AC system fault comprises a voltage criterion, a current criterion, a power criterion and a frequency criterion.

According to the voltage criterion, when a system voltage Us<a preset low value $U_{s\_setL}$ of the system voltage or Us>a preset high value $U_{s\_setH}$ of the system voltage, or when a DC voltage $U_{DC}$<a preset low value $U_{DC\_setL}$ of the DC voltage or $U_{DC}$>a preset high value $U_{DC\_setH}$ of the DC voltage, or when a zero-sequence voltage $U_0$ at an AC valve side >a zero-sequence voltage threshold $U_{0\_set}$ at the AC valve side, the system is switched from the open loop control mode to the double closed-loop control mode.

Here, the preset low value $U_{s\_setL}$ of the system voltage≤1 pu, and the preset high value $U_{s\_setH}$ of the system voltage≥1 pu; the preset low value $U_{DC\_setL}$ of the DC voltage≤1 pu, and the preset high value $U_{DC\_setH}$ of the DC voltage≥1 pu; and the zero-sequence voltage threshold $U_{0\_set}$ at the AC valve side ≥0 pu, where pu is an unit of per-unit value being a relative value between an actual value and a rated value.

According to the current criterion, when a current $I_s$ at a grid side >a current threshold $I_{s\_set}$ at the grid side or a bridge arm current $I_b$>a bridge arm current threshold $I_{b\_set}$, the system is switched from the open loop control mode to the double closed-loop control mode.

Here, the current threshold $I_{s\_set}$ at the grid side≥1 pu, and the bridge arm current threshold $I_{b\_set}$≥1pu.

According to the power criterion, when an active power $P$<an active power threshold $P_{\_set}$, the system is switched from the open loop control mode to the double closed-loop control mode.

Here, the active power threshold $P_{\_set}$≤1 pu.

According to a frequency criterion, when a system frequency f<a preset low value $f_{\_setL}$ of the system frequency or f>a preset high value $f_{\_setH}$ of the system frequency, the system is switched from the open loop control mode to the double closed-loop control mode.

Here, the preset low value $f_{\_setL}$ of the system frequency <50 Hz, and the preset high value $f_{\_setH}$ of the system frequency >50 Hz.

The double closed-loop control mode comprises outer-loop control and inner-loop control, as shown in Fig. 4.

In the outer-loop control, the AC voltage $U_d$ of the converter at the grid side and the preset d-axis component $U_d{}^*$ of the AC voltage of the converter at the grid side are input, a difference value is input into a proportional-integral controller PI, and an inner loop active current reference value is output through the proportional-integral controller. The AC voltage $U_q$ of the converter at the grid side and the preset q-axis component $U_q{}^*$ of the AC voltage of the converter at the grid side are input, a difference value is input into the proportional-integral controller PI, and an inner loop reactive current reference value is output through the proportional-integral controller.

In the inner-loop control, the inner loop active current reference value and the inner loop reactive current reference value from the outer-loop control are received, and the inner loop active current reference value, the inner loop reactive current reference value and the preset frequency reference value $f_{ref}{}^*$ are quickly tracked, so as to realize direct control of a current waveform and phase of the converter at an AC side.

In the double closed-loop control mode, the output voltage amplitude and frequency are controlled in the outer loop, and the current is controlled in the inner loop.

When selecting a control mode, the open-loop control mode is selected by switching to A, and the double closed-loop control mode is selected by switching to B.

Optionally, in order to meet the requirement for preventing the current from being out of limit in the fault state, the double closed-loop control mode also comprises a current limiting link Idmax which prevents the fault current of the AC system from being out of limit, as shown in Fig. 5. The current limiting link is set between the outer-loop control and the inner-loop control to avoid the trip of the VSC-HVDC transmission system due to overcurrent in the fault state.

Optionally, when the converter is switched from the open-loop control mode to the double closed-loop control mode, the input of the integrator in the outer-loop control is given an initial value, which is, but not limited to, -2 times to 2 times of an integral value of the integrator during normal operation before the fault, so that the integrator immediately exits a saturation state, which avoids the control failure and system instability caused by the desaturation process of the integrator in the closed-loop control.

The island open-loop operation avoids high-frequency oscillation caused by connecting transformers or short no-load lines, and the system is switched from the open-loop control mode to the double closed-loop control mode when the fault occurs, thus effectively restraining a fault overcurrent. In the process of control switching, the control failure and system instability caused by the desaturation process of the integrator in the closed-loop control are avoided by assigning the initial value to the input of the integrator in the outer-loop control.

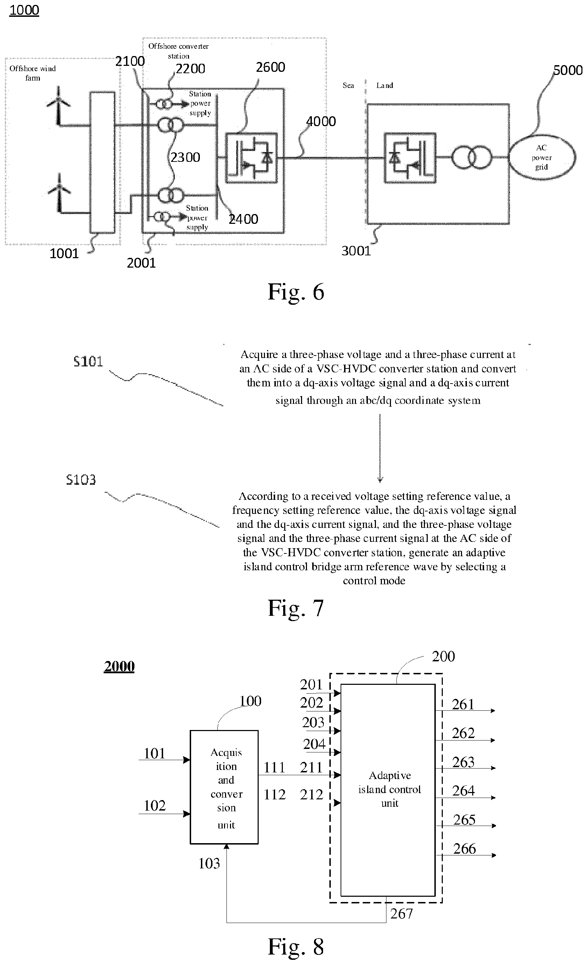

Fig. 6 shows a composition diagram of a VSC-HVDC transmission system (for example, a VSC-HVDC transmission converter station) connected with a new energy source or a passive system according to another exemplary embodiment of the application.

Taking connection to a large wind farm as an example, as shown in Fig. 6, according to the embodiment, an offshore wind power new energy system 1000 connected with a VSC-HVDC transmission converter station generally comprises an AC booster station 1001, an offshore VSC-HVDC transmission converter station 2001 (hereinafter referred to as offshore converter station) and an onshore converter station 3001. Electricity generated by an offshore wind farm is boosted by the AC booster station 1001 and connected to the offshore converter station 2001. Direct current is output through the offshore converter station 2001 and connected to the onshore converter station 3001 through a submarine cable 4000, thus realizing the transmission of wind farm power from the sea to an onshore AC power grid 5000.

Still referring to Fig. 6, the offshore converter station 2001 generally comprises an AC bus 2100, a station transformer 2200, connecting transformers 2300, a valve-side bus 2400, a valve-side switch (not shown), a converter valve and DC field device 2600, and corresponding measurement or control devices. The converter valve and DC field device 2600 generally comprises a converter valve, a bridge arm reactor, a DC field device, etc.

According to an embodiment, in the process of power transmission, wind power generated by the offshore wind farm is boosted and connected to the AC bus 2100 of the offshore converter station 2001. The AC bus 2100 is connected to the valve side bus 2400 through two groups of connecting transformers 2300 connected in parallel. The valve side bus 2400 is connected to an AC side of the converter valve and DC field device 2600. The offshore converter station 2001 supplies power to other devices of the offshore converter station through a high voltage station power transformer 2200. In the whole control process, the offshore converter station generates stable AC voltage through island control for grid connection of offshore wind power new energy.

Fig. 7 shows a flowchart of an adaptive island control mode according to an exemplary embodiment of the application.

Referring to Fig. 7, according to the embodiment, in S101, a three-phase voltage and a three-phase current at an AC side of the VSC-HVDC transmission system are acquired and converted into a dq-axis voltage signal and a dq-axis current signal through an abc/dq coordinate system.

In S103, according to a received voltage setting reference value, a frequency setting reference value, the dq-axis voltage signal and the dq-axis current signal, and a three-phase voltage signal and a three-phase current signal at the AC side of the VSC-HVDC transmission system, an adaptive island control bridge arm reference wave is generated by selecting a control mode.

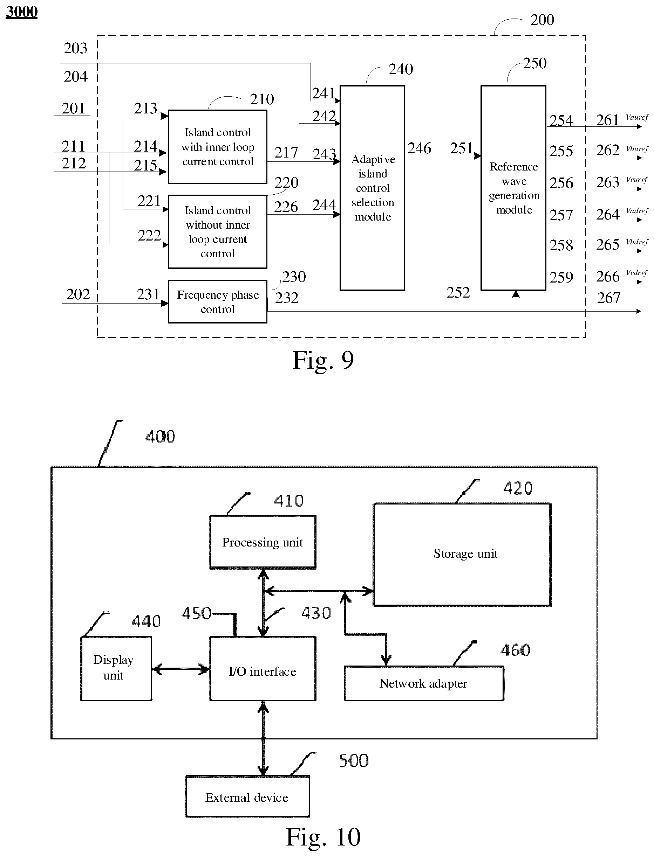

According to an embodiment, selecting a control mode comprises: selecting an island control mode with inner loop current control or an island control mode without inner loop current control. The specific switching process of the two modes will be described in detail with reference to Fig. 9.

Fig. 8 shows a diagram of a control system for island operation of a VSC-HVDC transmission system according to an embodiment of the application.

As shown in Figs. 7 and 8, according to an exemplary embodiment, an adaptive island control method for a VSC-HVDC transmission converter station provided by the application comprises:

in S 101, acquiring a three-phase voltage and a three-phase current at an AC side of the VSC-HVDC transmission system and converting the acquired voltage and current into a dq-axis voltage signal and a dq-axis current signal through an abc/dq coordinate system; and

in S103, according to a received voltage setting reference value, a frequency setting reference value, the dq-axis voltage signal and the dq-axis current signal, and a three-phase voltage signal and a three-phase current signal reflecting the VSC-HVDC operation state, generating an adaptive island control bridge arm reference wave by selecting a control mode.

According to an embodiment, selecting a control mode comprises: selecting an island control mode with inner loop current control or an island control mode without inner loop current control. The specific selection is the same as the aforementioned control mode embodiment, which will be described later with reference to Fig. 9. The specific structure of a control system will be described below with reference to Fig. 8.

Referring to Fig. 8, an adaptive island control system 2000 for a VSC-HVDC transmission converter station comprises an acquisition and conversion unit 100 and an adaptive island control unit 200.

The acquisition and conversion unit 100 is used for converting an acquired three-phase voltage and three-phase current at an AC side of the VSC-HVDC transmission system into a dq-axis voltage signal and a dq-axis current signal through an abc/dq coordinate system.

The adaptive island control unit 200 is used for generating an adaptive island control bridge arm reference wave according to a received voltage setting reference value, the dq-axis voltage signal and the dq-axis current signal, and a three-phase voltage signal and a three-phase current signal reflecting the VSC-HVDC operation state.

According to an embodiment, the acquisition and conversion unit 100 comprises a first input terminal 101, a second input terminal 102, a third input terminal 103, a first output terminal 111 and a second output terminal 112.

The first input terminal 101 is used for receiving a three-phase voltage signal at an AC side of the VSC-HVDC transmission system.

The second input terminal 102 is used for receiving a three-phase current signal at the AC side of the VSC-HVDC transmission system.

The third input terminal 103 is used for receiving a synchronous phase angle signal.

The first output terminal 111 is used for outputting a voltage signal reflecting the VSC-HVDC operation state.

The second output terminal 112 is used for outputting a current signal reflecting the VSC-HVDC operation state.

According to an embodiment, the adaptive island control unit 102 comprises a first input terminal 201, a second input terminal 202, a third input terminal 203, a fourth input terminal 204, a fifth input terminal 211, a sixth input terminal 212, a first output terminal 261, a second output terminal 262, a third output terminal 263, a fourth output terminal 264, a fifth output terminal 265, a sixth output terminal 266 and a seventh output terminal 267.

The first input terminal 201 is used for receiving a voltage setting reference value.

The second input terminal 202 is used for generating a synchronous phase angle signal according to a received frequency setting reference value for being sent to the third input terminal of the acquisition and conversion unit and generating a reference wave.

The third input terminal 203 is used for receiving a voltage signal reflecting the VSC-HVDC operation state.

The fourth input terminal 204 is used for receiving a current signal reflecting the VSC-HVDC operation state.

The fifth input terminal 211 is used for receiving a dq-axis voltage signal.

The sixth input terminal 212 is used for receiving a dq-axis current signal.

The first output terminal 261, the second output terminal 262, the third output terminal 263, the fourth output terminal 264, the fifth output terminal 265 and the sixth output terminal 266 respectively output three-phase upper bridge arm and three-phase lower bridge arm reference waves of the adaptive island control unit.

The seventh output terminal 267 is used for outputting a synchronous phase angle signal.

According to an embodiment, referring to Fig. 2, the first output terminal 111 of the acquisition and conversion unit is connected to the fifth input terminal 211 of the adaptive island control unit, the second output terminal 112 of the acquisition and conversion unit is connected to the sixth input terminal 212 of the adaptive island control unit, and the seventh output terminal 267 of the adaptive island control unit is connected to the third input terminal 103 of the acquisition and conversion unit.

The acquisition and conversion unit 100 is used for converting the acquired three-phase voltage and three-phase current at the VSC-HVDC AC side into dq-axis voltage $U_{dq}$ and current $I_{dq}$ through abc/dq according to the received phase angle signal, and the three-phase voltage and three-phase current at the VSC-HVDC AC side reach the acquisition and conversion unit 100 through the first input terminal 101 and the second input terminal 102 of the acquisition and conversion unit respectively. The third input terminal 103 of the acquisition and conversion unit 100 acquires the phase angle signal sent by the seventh output terminal 267 of the adaptive island control unit 200.

According to an embodiment, optionally, the first output terminal 101 and the second output terminal 102 of the acquisition and conversion unit 100 can be combined into one output terminal and sent to the adaptive island control unit 200, and correspondingly, the fifth input terminal 211 and the sixth input terminal 212 of the adaptive island control unit 200 can be combined into one input terminal to receive the signal output by the acquisition and conversion unit 100.

Optionally, the third input terminal 203 and the fourth input terminal 204 of the adaptive island control unit 200 can also be merged into the fifth input terminal 211 and the sixth input terminal 212, so that the third input terminal 203 and the fourth input terminal 204 can be omitted, and the three-phase voltage signal and the three-phase current signal output by the first output terminal 101 and the second output terminal 102 of the acquisition unit 100 can be directly sent to the fifth input terminal 211 and the sixth input terminal 212 of the adaptive island control unit 200.

The adaptive island control unit 200 is used for generating an adaptive island control bridge arm reference wave according to the received voltage setting reference value $U_{dq}^{*}$ and the dq-axis voltage $U_{dq}$ and current $I_{dq}$ through adaptive island control based on the three-phase voltage and current reflecting the VSC-HVDC operation state. The adaptive island control unit 200 generates a phase angle signal $\theta$ according to the received frequency setting reference value f_ref for being sent to the acquisition and conversion unit 100 and generating a reference wave. The voltage setting reference value $U_{dq}^{*}$, the frequency setting reference value f_ref, the dq-axis voltage $U_{dq}$ and the dq-axis current $I_{dq}$ are sent to the adaptive island control unit 200 via the first input terminal 201, the second input terminal 202, the fifth input terminal 211 and the sixth input terminal 212 of the adaptive control unit respectively. The three-phase voltage and three-phase current signals reflecting the VSC-HVDC operation state are sent to the adaptive island control unit 200 through the third input terminal 203 and the fourth input terminal 204 of the adaptive control unit respectively. The first output terminal 261, the second output terminal 262, the third output terminal 263, the fourth output terminal 264, the fifth output terminal 265 and the sixth output terminal 266 of the island control unit respectively output VSC-HVDC three-phase upper bridge arm and three-phase lower bridge arm reference waves and transmit them to a VSC-HVDC valve control system (not shown in the figure), and the seventh output terminal 267 of the island control unit outputs a phase angle signal $\theta$ to the third input terminal 103 of the acquisition and conversion unit.

Fig. 9 shows a structural diagram of an adaptive island control unit 200 according to an embodiment of the application.

As shown in Fig. 9, according to an exemplary embodiment, the adaptive island control unit 200 provided by this application comprises an island control module 210 with inner loop current control, an island control module 220 without inner loop current control, a frequency phase control module 230, an adaptive island control selection module 240, and a reference wave generation module 250.

The island control module 210 with inner loop current control is used for generating a dq-axis closed-loop voltage reference wave.

The island control module 220 without inner loop current control is used for generating dq-axis open-loop voltage reference wave.

The frequency phase control module 230 is used for generating a synchronous phase signal for the abc/dq coordinate system conversion of the acquisition and conversion unit and the dq/abc coordinate system conversion of the reference wave generation module.

The adaptive island control selection module 240 is used for selecting an island control module with inner loop current control or an island control module without inner loop current control.

The reference wave generation module 250 is used for receiving a synchronous phase signal of the frequency phase control module, convert the dq/abc coordinate system, and generate six bridge arm reference waves.

According to an embodiment, the island control module 210 with inner loop current control comprises a first input terminal 213, a second input terminal 214, a third output terminal 215 and a first output terminal 217.

The first input terminal 213 is used for receiving a voltage setting reference value.

The second input terminal 214 is used for receiving a dq-axis voltage signal.

The third input terminal 215 is used for receiving a dq-axis current signal.

The first output terminal 217 is used for outputting a dq-axis closed-loop voltage reference wave.

According to an embodiment, the island control module 220 without inner loop current control comprises a first input terminal 221, a second input terminal 222 and a first output terminal 226.

The first input terminal 221 is used for receiving a voltage setting reference value.

The second input terminal 222 is used for receiving a dq-axis voltage signal.

The first output terminal 226 is used for outputting a dq-axis open-loop voltage reference wave.

According to an embodiment, the adaptive island control selection module comprises a first input terminal 241, a second input terminal 242, a third input terminal 243, a fourth input terminal 244 and a first output terminal 246.

The first input terminal 241 is used for receiving a voltage signal reflecting the VSC-HVDC operation state.

The second input terminal 242 is used for receiving a current signal reflecting the VSC-HVDC operation state.

The third input terminal 243 is used for receiving a dq-axis closed-loop voltage reference wave.

The fourth input terminal 244 is used for receiving a dq-axis open-loop voltage reference wave.

The first output terminal 246 is used for outputting an adaptive input reference wave voltage.

According to an embodiment, the first output terminal 217 of the island control module 210 with inner loop current control is connected to the third input terminal 243 of the adaptive island control selection module 240; the first output terminal 226 of the island control module 220 without inner loop current control is connected to the fourth input terminal 244 of the adaptive island control selection module 240; the output terminal 232 of the frequency phase control module 230 is connected to the second input terminal 252 of the reference wave generation module; and the first output terminal 246 of the adaptive island control selection module 240 is connected to the first input terminal 251 of the reference wave generation module.

According to an embodiment, the island control module 210 with inner loop current control is used for generating a current reference wave $I_{dq\_ref}$ through an outer loop voltage controller according to the received voltage setting reference value $U_{dq}^{*}$ and the dq-axis voltage $U_{dq}$, and the current reference wave $I_{dq\_ref}$ and the dq-axis current $I_{dq}$ generate a dq-axis closed-loop voltage reference wave $U_{dq\_ref\_cl}$ with current closed-loop control through an inner loop current controller, which is sent to the third input terminal 243 of the adaptive island control selection module, wherein the voltage setting reference value $U^*_{dq}$, the dq-axis voltage $U_{dq}$ and the dq-axis current $I_{dq}$ are sent to the first input terminal 213, the second input terminal 214 and the third input terminal 215 of the island control module with inner loop current control.

According to an embodiment, the island control module 220 without inner-loop current control is used for generating a dq-axis open-loop voltage reference wave $U_{dq\_ref\_op}$ without current closed-loop control through outer loop voltage control according to the received voltage setting reference value $U^*_{dq}$ and the dq-axis voltage $U_{dq}$, which is sent to the fourth input terminal 244 of the adaptive island control selection module 240, wherein the voltage setting reference value $U^*_{dq}$ and the dq-axis voltage $U_{dq}$ are sent to the first input terminal 221 and the second input terminal 222 of the island control module without inner loop current control.

The frequency phase control module 230 is used for generating a synchronous phase signal according to the received frequency setting reference value $f_{ref}$ for the abc/dq conversion of the acquisition and conversion module and the dq/abc conversion of the reference wave generation module. The frequency setting reference value $f_{ref}$ is connected to the first input terminal 231 of the frequency phase control module. The first output terminal 232 of the frequency phase control module is connected to the third input terminal 252 of the reference wave generation module.

The adaptive island control selection module 240 is used for adaptively selecting the dq-axis closed-loop voltage reference wave $U_{dq\_ref\_cl}$ with current closed-loop control or the dq-axis open-loop voltage reference wave $U_{dq\_ref\_op}$ without current closed-loop control according to the VSC-HVDC operation state, and the VSC-HVDC operation state is adaptively judged and selected by the three-phase voltage and three-phase current or the comprehensive quantity of the three-phase voltage and three-phase current. The VSC-HVDC operation state is connected to the first input terminal 241 and the second input terminal 242 of the adaptive island control selection module through the three-phase voltage and three-phase current. The dq-axis closed-loop voltage reference wave $U_{dq\_ref\_cl}$ with current closed-loop control or the dq-axis open-loop voltage reference wave $U_{dq\_ref\_op}$ without current closed-loop control is sent to the third input terminal 243 and the fourth input terminal 244 of the adaptive island control selection module respectively. An adaptive input reference wave selected according to the adaptive judgment of the VSC-HVDC operation state is sent to the output terminal 246 of the adaptive island control selection module.

The reference wave generation module 250 is used for converting a dq voltage reference wave output by the adaptive island control selection module and the synchronous phase signal of frequency and phase control into abc coordinates through dq/abc, and then generating six bridge arm reference waves required by valve control. The dq-axis reference voltage output by the adaptive island control selection module is sent to the first input terminal 251 of the reference wave generation module, and the generated six bridge arm reference waves are sent to the first output terminal 254 to the sixth output terminal 259 of the reference wave generation module respectively.

The three-phase voltage $U_x$(x=a,b,c) reflecting the VSC-HVDC operation state can be an AC voltage for VSC-HVDC connection, the three-phase current $I_x$(x=a,b,c) can be an AC current, a valve side current or a bridge arm current, the operation state can be a system power P obtained by multiplying the AC voltage and the current, and P=3$U_x$*$I_x$. According to the adaptive judgment of the VSC-HVDC operation state based on the three-phase voltage, three-phase current or active power, the adaptive selection module selects the dq-axis closed-loop voltage reference wave $U_{dq\_ref\_cl}$ with current closed-loop control or the dq-axis open-loop voltage reference wave $U_{dq\_ref\_op}$ without current closed-loop control based on the following criteria.

According to an embodiment, when the system power P< $P_{set1}$ or the peak current $I_{peak}$< $I_{set1}$ or

$$\sqrt{I_d^2 + I_q^2} < I_{set1}$$ in the VSC-HVDC startup unlocking and no-load state, the island control module 220 without inner loop current control is selected to operate, otherwise, automatic switching to the island module 210 with inner loop current control is conducted, and $P_{set1} \leq 0.1$ pu and $I_{set1} \leq 0.1$ pu.

Under the control of the module 210 with inner loop current control, when it is detected that a voltage harmonic content $U_{s\_h}$ of the VSC-HVDC system >$U_{s\_hset}$ or a current harmonic content $I_h$>$I_{v\_hset}$, automatic switching to the island control system without the inner loop current control module is conducted, and $U_{s\_hset} \geq 0.01$ pu and $I_{v\_hset} \geq 0.01$ pu.

Under the control of the module without inner loop current control, when it is detected that a zero-sequence voltage $U_0$ at a grid side > $U_{0\_set}$ or a current $I_s$ at the grid side >$I_{s\_set}$ or a bridge arm current $I_b$>Ib_set, automatic switching to the module with inner loop current control is conducted, and $U_{0\_set} \geq 0.05$ pu, $I_{s\_set} \geq 1.15$ pu and $I_{b\_set} \geq 1.15$ pu.

The dq-axis voltage $U_{dq}$, dq-axis current $I_{dq}$, $U^*_{dq}$ command value, $U_{dq\_ref\_cl}$ and $U_{dq\_ref\_op}$ represent positive sequence components and negative sequence components, four in total.

The input terminals 251 and 252 of the reference wave generation module 250 respectively receive the dq-axis adaptive input reference wave and the synchronous phase angle signal, and generate a three-phase voltage $U_{x\_ref(a,b,c)}$ for positive and negative sequence superposition after dq/abc conversion, and then, after signal conversion $V_{xu\_ref}=U_{dc}/2-U_{x\_ref(x=a,b,c)}$ and $V_{x\_dref}=U_{dc}/2-U_{x\_ref}$, six bridge arm reference waves are generated, where $U_{dc}$ is a DC voltage setting reference value.

A voltage outer loop controller and a current loop controller in the island control module with inner loop current control and the island control module without inner loop current control can be PI controllers or PR controllers.

Fig. 10 shows a block diagram of an electronic device for island operation control of a VSC-HVDC transmission system according to an embodiment of the application.

As shown in Fig. 10, the electronic device 400 is represented in the form of a general-purpose computing device. Components of the electronic device 400 may include, but are not limited to, at least one processing unit 410, at least one storage unit 420, a bus 430 connecting different system components (including the storage unit 420 and the processing unit 410), a display unit 440, etc.

The storage unit stores a program code, and the program code can be executed by the processing unit 410, so that the processing unit 410 performs the control methods described in this specification according to various exemplary embodiments of the application.

The bus 430 may represent or more of several types of bus structures, including memory cell bus or memory cell controller, peripheral bus, graphics acceleration port, processing unit or local bus using any of a variety of bus structures.

The electronic device 400 can also communicate with one or more external devices 500 (e.g., keyboard, pointing device, Bluetooth device, etc.), with one or more devices that enable users to interact with the electronic device 400, and/or with any device that enables the electronic device 400 to communicate with one or more other computing devices (e.g., routers, modems, etc.). This communication can be performed through an input/output (I/O) interface 450. Further, the electronic device 400 can also communicate with one or more networks (such as a local area network (LAN), a wide area network (WAN) and/or a public network, such as the Internet) through a network adapter 460. The network adapter 460 can communicate with other modules of the electronic device 400 through a bus 430. It should be understood that although not shown in the figure, other hardware and/or software modules can be used in conjunction with the electronic device 400, including but not limited to microcodes, device drivers, redundant processing units, external disk drive arrays, RAID systems, tape drives, data backup storage systems, etc.

According to the adaptive island control method for island operation of the VSC-HVDC transmission system provided by the application, a control system of a VSC-HVDC converter station connected with a new energy source adaptively selects an adaptive island control method with an inner loop current control mode or without the inner loop current control mode according to an operation state of the VSC-HVDC transmission system. By automatically switching to a mode without inner loop current control, the system can be stabilized because there is no negative resistance caused by delay such as sampling control, the problem of medium-high frequency oscillation caused by introducing a negative resistance component into closed-loop control can be avoided, and the controllability of the fault current in a fault state is realized.

The embodiments of the application have been introduced in detail above. Specific examples are applied herein to illustrate the principle and implementation of the application. The above embodiments are only used to help understand the method of the application and its core ideas. The modifications or deformations made by those skilled in the art based on the ideas of the application and the specific implementation and application scope of the application are within the scope of protection of the application. To sum up, the content of this specification should not be construed as a limitation of the application.

## Claims

1. A control method for island operation of a VSC-HVDC transmission system, wherein the VSC-HVDC transmission system is connected with an AC system and comprises a converter, **characterized in that** the control method comprises:

   implementing startup and steady-state operation of the converter in an open-loop control mode in a startup state during the island operation of the VSC-HVDC transmission system;
   switching the converter from the open-loop control mode to a double closed-loop control mode when a fault of the AC system is detected, to limit fault current and suppress interference; and operating in an adaptive island control mode in a non-fault state; or
   implementing the steady-state operation of the converter in the open-loop control mode in the non-fault state.

2. The control method according to claim 1, wherein the adaptive island control mode comprises:

   acquiring a three-phase voltage and a three-phase current at an AC side of the VSC-HVDC transmission system and converting the acquired voltage and current into a dq-axis voltage signal and a dq-axis current signal through an abc/dq coordinate system; and

generating an adaptive island control bridge arm reference wave, by selecting a control mode, according to a received voltage setting reference value, a frequency setting reference value, the dq-axis voltage signal and the dq-axis current signal, and a three-phase voltage signal and a three-phase current signal at the AC side of the VSC-HVDC transmission system.

3. The control method according to claim 2, wherein selecting a control mode comprises:
selecting an island control mode with inner loop current control or an island control mode without inner loop current control.

4. The control method according to claim 3, wherein selecting an island control mode with inner loop current control or an island control mode without inner loop current control comprises:

selecting the island control mode without inner loop current control when a system power $P<P_{set1}$ or a peak current $I_{peak}<I_{set1}$ or

$$\sqrt{I_d^2 + I_q^2} < I_{set1}$$ in a startup unlocking and no-load state; and

otherwise, automatically switching to the island control mode with inner loop current control, wherein $P_{set1}\leq0.1$ pu, and $I_{set1}\leq0.1$ pu.

5. The control method according to claim 3, wherein selecting an island control mode with inner loop current control or an island control mode without inner loop current control further comprises:

automatically switching to the island control mode without the inner loop current control module when it is detected that a voltage harmonic content Us_h>Us_hset or a current harmonic content I_h>Iv_hset at a grid side in the control mode with an inner loop current control module, wherein Us_hset≥0.01 pu, and Iv_hset≥0.01 pu.

6. The control method according to claim 3, wherein selecting an island control mode with inner loop current control or an island control mode without inner loop current control further comprises:

automatically switching to the island control mode with the inner loop current control module when it is detected that a zero-sequence voltage $U_0> U_{0\_set}$ or a current $I_s>I_{s\_set}$ or a bridge arm current $I_b>I_{b\_set}$ at a grid side in the control mode without an inner loop current control module,

wherein $U_{0\_set} \geq 0.05$ pu, $I_{s\_set}\geq1.15$ pu, and $I_{b\_set}\geq1.15$ pu.

7. The control method according to claim 1, wherein the open-loop control mode comprises:
using a preset AC voltage of the converter at a grid side and a preset frequency reference value as inputs of an open-loop controller, and outputting a constant AC voltage reference wave of the converter after adjustment by the open-loop controller, so as to control a current waveform and phase of the converter at an AC side.

8. The control method according to claim 1, wherein the double closed-loop control mode comprises:

outer-loop control: inputting an AC voltage and frequency of the converter at a grid side, and outputting an inner loop active current reference value and an inner loop reactive current reference value through a proportional-integral controller; and
inner-loop control: receiving the inner loop active current reference value and the inner loop reactive current reference value output by the outer-loop control, and quickly tracking the inner loop active current reference value and the inner loop reactive current reference value, so as to directly control a current waveform and phase of the converter at an AC side.

9. The control method according to claim 1, wherein the double closed-loop control mode further comprises:
preventing a fault current of the AC system from being out of limit by a current limiting link.

10. The control method according to claim 1, further comprising: assigning an initial value to an input of an outer-loop control integrator when the converter is switched from the open-loop control mode to the double closed-loop control mode.

11. The control method according to claim 1, wherein the detection of a fault of the AC system comprises:

voltage criterion: when a system voltage Us<a preset low value $U_{s\_setL}$ of the system voltage or Us>a preset high value $U_{s\_setH}$ of the system voltage, or when a DC voltage $U_{DC}<$a preset low value $U_{DC\_setL}$ of the DC voltage or $U_{DC}>$a preset high value $U_{DC\_setH}$ of the DC voltage, or when a zero-sequence voltage U0 at an AC valve side >a zero-sequence voltage threshold $U_{0\_set}$ at the AC valve side, switching the system from the open-loop control mode to the double closed-loop control mode;
current criterion: when a current Is at a grid side >a current threshold $I_{s\_set}$ at the grid side or a bridge arm current Ib>a bridge arm current threshold Ib_set, switching the system from the open-loop control mode to the double closed-loop control mode;

power criterion: when an active power P<an active power threshold $P_{\_set}$, switching the system from the open-loop control mode to the double closed-loop control mode; and

frequency criterion: when a system frequency f<a preset low value $f_{\_setL}$ of the system frequency or f>a preset high value $f_{\_setH}$ of the system frequency, switching the system from the open-loop control mode to the double closed-loop control mode.

12. The control method according to claim 11, wherein the preset low value $U_{s\_setL}$ of the system voltage≤1 pu, and the preset high value $U_{s\_setH}$ of the system voltage≥1 pu; the preset low value $U_{DC\_setL}$ of the DC voltage≤1 pu, and the preset high value $U_{DC\_setH}$ of the DC voltage≥1 pu; and the zero-sequence voltage threshold $U_{0\_set}$ at the AC valve side≥0 pu, the current threshold $I_{s\_set}$ at the grid side≥1 pu, the bridge arm current threshold Ib_set≥1 pu, the active power threshold $P_{\_set}$ ≤1 pu, the preset low value $f_{\_setL}$ of the system frequency <50 Hz, and the preset high value $f_{\_setH}$ of the system frequency >50 Hz, where pu is an unit of per-unit value being a relative value between an actual value and a rated value.

13. The control method according to claim 1, wherein during island operation of the VSC-HVDC transmission system, the VSC-HVDC transmission system operates with load or without load.

14. A control system for island operation of a VSC-HVDC transmission system, **characterized in that** the control system comprises:

an acquisition and conversion unit, configured to convert an acquired three-phase voltage and three-phase current at an AC side of the VSC-HVDC transmission system into a dq-axis voltage signal and a dq-axis current signal through an abc/dq coordinate system; and

an adaptive island control unit, configured to generate an adaptive island control bridge arm reference wave according to a received voltage setting reference value, a frequency setting reference value, the dq-axis voltage signal and the dq-axis current signal, and a three-phase voltage signal and a three-phase current signal at the AC side of the VSC-HVDC transmission system.

15. The control system according to claim 14, wherein the adaptive island control unit comprises:

an island control module with inner loop current control, configured to generate a dq-axis closed-loop voltage reference wave;

an island control module without inner loop current control, configured to generate a dq-axis open-loop voltage reference wave;

a frequency phase control module, configured to generate a synchronous phase signal for the abc/dq coordinate system conversion of the acquisition and conversion unit and the dq/abc coordinate system conversion of a reference wave generation module;

an adaptive island control selection module, configured to select an island control module with inner loop current control or an island control module without inner loop current control; and

the reference wave generation module, configured to receive the synchronous phase signal of the frequency phase control module for dq/abc coordinate system conversion, and generate six bridge arm reference waves.

16. The control system according to claim 15, wherein the island control module with inner loop current control is further configured to:
convert the received voltage setting reference value, the dq-axis voltage signal and the dq-axis current signal into an output signal of a dq-axis closed-loop voltage reference wave.

17. The control system according to claim 15, wherein the island control module without inner loop current control is further configured to:
convert the voltage setting reference value and the dq-axis voltage signal into an output signal of a dq-axis open-loop voltage reference wave.

18. The control system according to any one of claims 15-17, wherein the adaptive island control selection module is further configured to:
convert the three-phase voltage signal and the three-phase current signal at the AC side of the VSC-HVDC transmission system, the dq-axis closed-loop voltage reference wave and the dq-axis open-loop voltage reference wave into an output signal of an adaptive input reference wave voltage.

19. The control system according to claim 15, wherein a voltage outer loop controller and a current loop controller in both the island control module with inner loop current control and the island control module without inner loop current control each comprise a PI controller and/or a PR controller.

20. An electronic device, **characterized in that** the electronic device comprises:

one or more processors; and
a storage apparatus configured to store one or more programs, wherein
when the one or more programs are executed by the one or more processors, the one or more processors implement the control method according to any one of claims 1-13.

EP 4 283 816 A1

Converter station under island operation

Converter station under constant DC voltage operation

AC power grid

Fig. 1

Start

S10 — Island mode unlocked, open-loop start

The VSC-HVDC system rises to the rated value of $U_N$ kV at the rate of $\alpha$ kV/s

S20 — The system operates in an open-loop mode or in an adaptive island control | mode

The system is considered to be faulty when $U_s < U_{s\_set L}$ or $U_s > U_{s\_set H}$ or $U_{DC} < U_{DC\_set L}$ or $U_{DC} > U_{DC\_set H}$ or $U_0 > U_{0\_set}$ or $I_S > I_{S\_set}$ or $I_b > I_{b\_set}$ or $P < P_{\_set}$ or $f < f_{\_set L}$ or $f > f_{\_set H}$

No

Yes

S30 — The system runs in a double closed-loop mode, and the closed-loop control integrator is given the initial value a

Fig. 2

Fig. 3

Fig. 4

Fig. 5

1000

Fig. 6

S101

Acquire a three-phase voltage and a three-phase current at an AC side of a VSC-HVDC converter station and convert them into a dq-axis voltage signal and a dq-axis current signal through an abc/dq coordinate system

S103

According to a received voltage setting reference value, a frequency setting reference value, the dq-axis voltage signal and the dq-axis current signal, and the three-phase voltage signal and the three-phase current signal at the AC side of the VSC-HVDC converter station, generate an adaptive island control bridge arm reference wave by selecting a control mode

Fig. 7

2000

Fig. 8

**3000**

Fig. 9

Fig. 10

## INTERNATIONAL SEARCH REPORT

| | International application No. |
|---|---|
| | **PCT/CN2022/072571** |

| A. | CLASSIFICATION OF SUBJECT MATTER |
|---|---|
| | H02J 3/38(2006.01)i |

According to International Patent Classification (IPC) or to both national classification and IPC

| B. | FIELDS SEARCHED |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, IEEE: 柔性直流输电, 孤岛, 故障, 启动, 开环, 闭环, 电压环, 电流环, HVDC, island, fault, start, open loop, close loop, voltage loop, current loop

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108462199 A (XJ GROUP CORPORATION et al.) 28 August 2018 (2018-08-28)<br>see description, paragraphs 2-48, figures 1-4 | 14-19 |
| A | CN 108462199 A (XJ GROUP CORPORATION et al.) 28 August 2018 (2018-08-28)<br>see description, paragraphs 2-48, figures 1-4 | 1-13, 20 |
| A | CN 107465214 A (CHINA ELECTRIC POWER RESEARCH INSTITUTE STATE GRID CORP. CHINA et al.) 12 December 2017 (2017-12-12)<br>see entire document | 1-20 |
| A | 王庆 等 (WANG, Qing et al.). "柔性直流输电系统孤岛运行方式下的故障电流抑制方法 (Fault Current Suppression Method for Flexible DC Transmission System Operating in Islanded Mode)"<br>电力系统自动化 (Automation of Electric Power Systems),<br>Vol. 42, No. 7, 10 April 2018 (2018-04-10),<br>ISSN: 1006-6047,<br>pp. 56-59 | 1-20 |
| A | Sotirios I. Nanou et al. "Evaluation of Control Schemes for Island VSC-HVDC Links Operating in Parallel with AC Interconnectors"<br>*2017 IEEE Manchester PowerTech*, 20 July 2017 (2017-07-20),<br>see entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2022** | **06 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 283 816 A1

INTERNATIONAL SEARCH REPORT
Information on patent family members

International application No.

PCT/CN2022/072571

| Patent document cited in search report | | | Publication date (day/month/year) | Patent family member(s) | | | Publication date (day/month/year) |
|---|---|---|---|---|---|---|---|
| CN | 108462199 | A | 28 August 2018 | CN | 108462199 | B | 25 August 2020 |
| CN | 107465214 | A | 12 December 2017 | CN | 107465214 | B | 06 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610938897